# EUROPEAN PATENT SPECIFICATION

(11) **EP 3 613 609 B1**
(45) Date of publication and mention of the grant of the patent: **04.01.2023**
(21) Application number: 18189860.2
(22) Date of filing: 21.08.2018
(51) Int. Cl.: B44C 1/18, B60B 21/12

(54) **MARKED WHEEL RIM AND METHOD FOR MANUFACTURING THE SAME**
MARKIERTE RADFELGE UND VERFAHREN ZUR HERSTELLUNG DAVON
JANTE DE ROUE MARQUÉE ET SON PROCÉDÉ DE FABRICATION

(43) Date of publication of application: 26.02.2020
(73) Proprietor: Marshal Industrial Corp., VG1110 Tortola (VG)
(72) Inventor: Tsai, Ming-Jen, 350 Miaoli County (TW)
(74) Representative: Lang, Christian

(56) References cited:
- EP-A1- 1 813 416
- EP-A2- 1 983 141
- CN-A- 107 444 009

## Description

### BACKGROUND OF THE INVENTION

### Field of the Invention

The present invention relates to a marked wheel rim and method for manufacturing the same.

### Description of the Prior Art

The document CN 107444009 A discloses a bicycle rim having braking surfaces as embedded layers.

Generally, marks or decorations of a wheel rim and a frame of a bicycle are processed by water transfer printing, such as non-film transfer, after the wheel rim or the frame is finished. A conventional marking process includes following steps: softening a sticker by immersing in water; adhering the sticker to a target position; removing residual air and water between the sticker and the target position; wiping water and glue on an surface of the sticker; drying the labeled position completely by heating at low temperature. The marking process is complicated and time-consuming, and the marks protrude beyond a surface of the wheel rim.

The present invention is, therefore, arisen to obviate or at least mitigate the above-mentioned disadvantages.

### SUMMARY OF THE INVENTION

The main object of the present invention is to provide a marked wheel rim and method for manufacturing the same, which have simple structure of the mark and steps.

To achieve the above and other objects, the present invention provides a marked wheel rim, including: a rim body and a mark. The rim body includes an outer surface. The mark is embedded on the outer surface and includes an outer peripheral edge abutting against the rim body. The outer peripheral edge is non-protrusive beyond the outer surface.

To achieve the above and other objects, the present invention provides a method of manufacturing the marked wheel rim described above, including following steps of: preparing a mold, the mold including an inner surface; placing the rim body and the mark in the mold, wherein the mark is disposed between the outer surface of the rim body and the inner surface of the mold; combining the mark and the rim body.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a stereogram of a preferable embodiment of the present invention;
Fig. 2 is a stereogram of a wheel rim of a preferable embodiment of the present invention;
Fig. 3 is a breakdown drawing of a preferable embodiment of the present invention;
Fig. 4 is a cross-sectional view of Fig. 1;
Fig. 5 is a partial enlargement of Fig. 4;
Fig. 6 is a partial enlargement of Fig. 5.

### DETAILED DESCRIPTION OF THE PREFERRED EMBODIMENTS

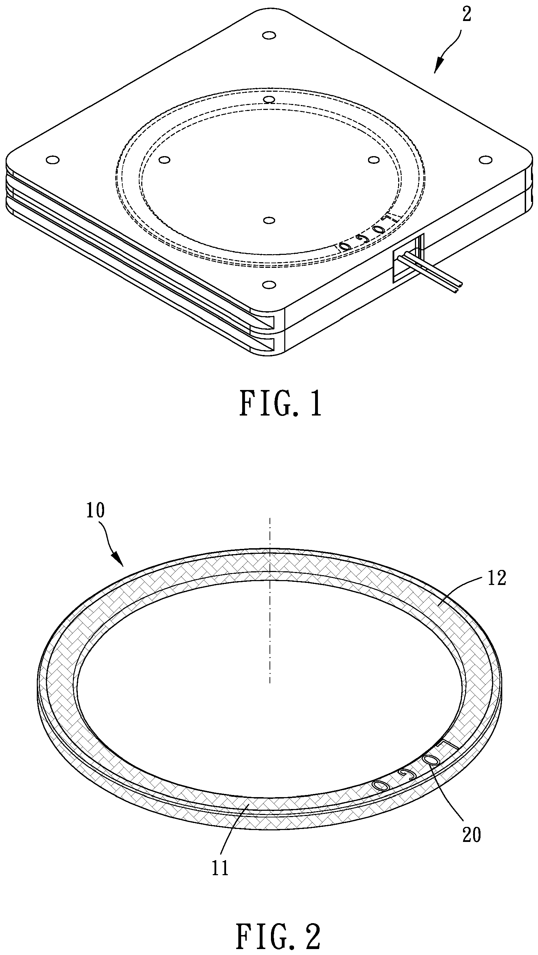

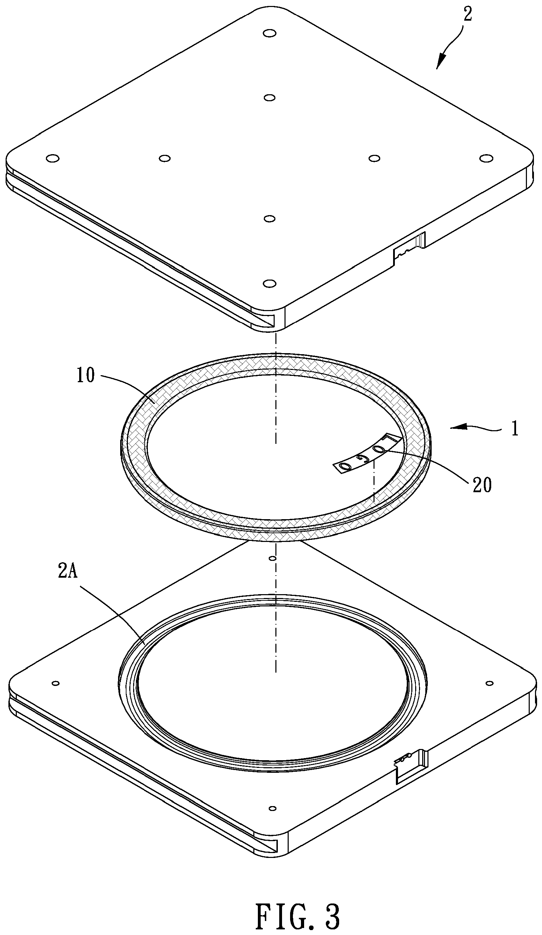

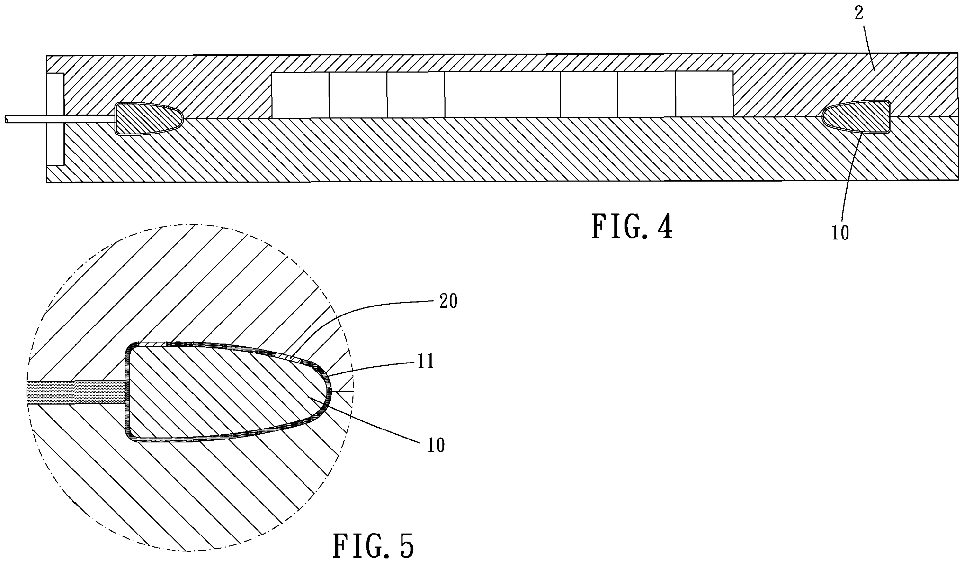

Please refer to Figs. 1 to 6 for a preferable embodiment of the present invention.

A marked wheel rim 1 of the present invention includes a rim body 10 and a mark 20.

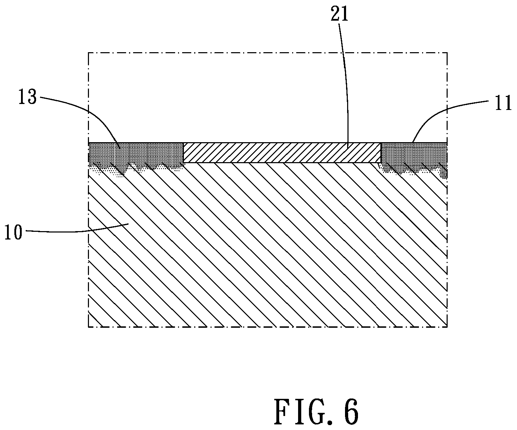

The rim body 10 includes an outer surface 11. The mark 20 is embedded on the outer surface 11 and includes an outer peripheral edge 21 (see figure 6) abutting against the rim body 10. The outer peripheral edge 21 is non-protrusive beyond the outer surface 11 so that the marked wheel rim 1 has a smooth surface and a preferable appearance and the mark 20 is not easy to deform or peel off.

The rim body 10 includes a plurality of fibers 12 and a binding material 13 which binds the plurality of fibers 12 and forms the outer surface 11. The plurality of fibers 12 may include, for example, carbon fibers, glass fibers and Kevlar fibers. The binding material 13 may be resin which is curable by heating to shape the plurality of fibers 12. However, the rim body may be made of a single material or other composite materials, or formed integrally.

The outer peripheral edge 21 and the outer surface 11 are flush with each other so as to avoid deformation and/or peeling of the mark 20 by external force. In this embodiment, an outer surface of the mark 20 is entirely flush with the outer surface 11 of the rim body 10. The mark 20 is exposed on the outer surface 11. There is color difference between the outer surface 11 and the mark 20, and the color difference may refer to color shade (such as dark and light) or color system (such as red and blue), for recognition. However, the outer peripheral edge may be inwardly lower than the outer surface.

A method of manufacturing the marked wheel rim 1 is further provided, including following steps of: preparing a mold 2, the mold 2 including an inner surface 2A; placing the rim body 10 and the mark 20 in the mold 2, wherein the mark 20 is disposed between the outer surface 11 of the rim body 10 and the inner surface 2A of the mold 2; combining the mark 20 and the rim body 10. Therefore, the mark 20 is rapidly and simply combined with the rim body 10.

In the process of the marked wheel rim 1, the mark 20 is disposed on the rim body 10 or the inner surface 2A before combined with the rim body 10. Preferably, the outer peripheral edge 21 of the mark 20 continuously annularly contacts the inner surface 2A of the mold 2 before the mark 20 is combined with the rim body 10 so as to avoid the binding material 13 overflowing to be within the mark 20 and the mold 2 and stabilize a binding position of the mark 20 to prevent the mark 20 from being crumpled or displaced in the mold 2. Specifically, the mark 20 is combined with the rim body 10 by heating. In this embodiment, the plurality of fibers 12 include dry carbon yarns which are wound around the rim body 10. The mark 20 is disposed on the outer surface 11 of the rim body 10 before combined with the rim body 10. The rim body 10 is placed in the mold 2 and the binding material 13 is injected into the mold 2, and then the rim body 10 is cured and combined with the mark 20 by heating and pressurizing. A final product can be obtained without any additional post treatment such as surface processing. However, the plurality of fibers 12 may include fiber materials which are pre-immersed with the binding material 13, and the rim body 10 is simultaneously molded and combined with the mark 20 by heating in the mold 2 so as to simplify the process.

Moreover, the mark may be a sticker with an adhesive layer. The mark may also be combined with the rim body by the binding material.

Although particular embodiments of the invention have been described in detail for purposes of illustration, various modifications and enhancements may be made within the limits defined by the appended claims.

## Claims

1. A marked wheel rim (1), including:
a rim body (10), including an outer surface (11);
a mark (20), embedded on the outer surface (11) and including an outer peripheral edge (21) abutting against the rim body (10), and the outer peripheral edge (21) being non-protrusive beyond the outer surface (11).

2. The marked wheel rim (1) of claim 1, wherein the rim body (10) includes a plurality of fibers (12) and a binding material (13) which binds the plurality of fibers (12) and forms the outer surface (11).

3. The marked wheel rim (1) of claim 1, wherein the outer peripheral edge (21) and the outer surface (11) are flush with each other.

4. The marked wheel rim (1) of claim 1, wherein an outer surface of the mark (20) is entirely flush with the outer surface (11) of the rim body (10).

5. The marked wheel rim of claim 1, wherein the mark (20) is exposed on the outer surface (11).

6. The marked wheel rim of claim 1, wherein there is color difference between the outer surface (11) and the mark (20).

7. A method of manufacturing the marked wheel rim of claim 1, including following steps of:
preparing a mold (2), the mold (2) including an inner surface (2A);
placing the rim body (10) and the mark (20) in the mold (2), wherein the mark (20) is disposed between the outer surface (11) of the rim body (10) and the inner surface (2A) of the mold (2);
combining the mark (20) and the rim body (10).

8. The method of claim 7, wherein the mark (20) is disposed on the rim body (10) or the inner surface (2A) before combined with the rim body (10).

9. The method of claim 7, wherein the outer peripheral edge (21) of the mark (20) continuously annularly contacts the inner surface (2A) before the mark (20) is combined with the rim body (10).

10. The method of claim 7, wherein the mark (20) is combined with the rim body (10) by heating.

## Patentansprüche

1. Markierte Radfelge (1), die umfasst:
einen Felgenkörper (10), der eine Außenfläche (11) beinhaltet,
eine Markierung (20), die in die Außenfläche (11) eingebettet ist und einen äußeren Umfangsrand (21) beinhaltet, der an dem Felgenkörper (10) anliegt,
wobei der Umfangsrand (21) nicht über die Außenfläche (11) hinausragt.

2. Markierte Radfelge (1) nach Anspruch 1, bei welcher der Felgenkörper (10) eine Vielzahl von Fasern (12) und ein Bindematerial (13) enthält, welches die Vielzahl von Fasern (12) bindet und die Außenfläche (11) bildet.

3. Markierte Radfelge (1) nach Anspruch 1, bei welcher der äußere Umfangsrand (21) und die Außenfläche (11) miteinander bündig sind.

4. Markierte Radfelge (1) nach Anspruch 1, bei welcher eine Außenfläche der Markierung (20) vollständig mit der Außenfläche (11) des Felgenkörpers (10) bündig ist.

5. Markierte Radfelge nach Anspruch 1, bei welcher die Markierung (20) an der Außenfläche (11) freiliegt.

6. Markierte Radfelge nach Anspruch 1, bei welcher ein Farbunterschied zwischen der Außenfläche (11) und der Markierung (20) besteht.

7. Verfahren zur Herstellung der markierten Radfelge nach Anspruch 1, umfassend die folgenden Schritte:
Herstellen einer Form (2), wobei die Form (2) eine Innenfläche (2A) aufweist, Einlegen des Felgenkörpers (10) und der Markierung (20) in die Form (2), wobei die Markierung (20) zwischen der Außenfläche (11) des Felgenkörpers (10) und der Innenfläche (2A) der Form (2) angeordnet ist, Kombinieren der Markierung (20) und des Felgenkörpers (10).

8. Verfahren nach Anspruch 7, bei welchem die Markierung (20) auf dem Felgenkörper (10) oder der Innenfläche (2A) angeordnet wird, bevor sie mit dem Felgenkörper (10) kombiniert wird.

9. Verfahren nach Anspruch 7, bei welchem die äußere Umfangskante (21) der Markierung (20) die Innenfläche (2A) kontinuierlich ringförmig berührt, bevor die Markierung (20) mit dem Felgenkörper (10) verbunden wird.

10. Verfahren nach Anspruch 7, bei welchem die Markierung (20) durch Erhitzen mit dem Felgenkörper (10) verbunden wird.

## Revendications

1. Jante de roue marquée (1), incluant :
un corps de jante (10), incluant une surface extérieure (11) ;
une marque (20), intégrée sur la surface extérieure (11) et incluant un bord périphérique extérieur (21) en appui contre le corps de jante (10), et le bord périphérique extérieur (21) étant non saillant au-delà de la surface extérieure (11).

2. Jante de roue marquée (1) selon la revendication 1, dans laquelle le corps de jante (10) inclut une pluralité de fibres (12) et un matériau liant (13) qui lie la pluralité de fibres (12) et forme la surface extérieure (11).

3. Jante de roue marquée (1) selon la revendication 1, dans laquelle le bord périphérique extérieur (21) et la surface extérieure (11) sont alignés l'un sur l'autre.

4. Jante de roue marquée (1) selon la revendication 1, dans laquelle une surface extérieure de la marque (20) est entièrement alignée sur la surface extérieure (11) du corps de jante (10).

5. Jante de roue marquée selon la revendication 1, dans laquelle la marque (20) est exposée sur la surface extérieure (11).

6. Jante de roue marquée selon la revendication 1, dans laquelle il y a une différence de couleur entre la surface extérieure (11) et la marque (20).

7. Procédé de fabrication de la jante de roue marquée selon la revendication 1, incluant les étapes suivantes consistant à :
préparer un moule (2), le moule (2) incluant une surface intérieure (2A) ;
placer le corps de jante (10) et la marque (20) dans le moule (2), dans lequel la marque (20) est disposée entre la surface extérieure (11) du corps de jante (10) et la surface intérieure (2A) du moule (2) ; combiner la marque (20) et le corps de jante (10).

8. Procédé selon la revendication 7, dans lequel la marque (20) est disposée sur le corps de jante (10) ou la surface intérieure (2A) avant d'être combinée au corps de jante (10).

9. Procédé selon la revendication 7, dans lequel le bord périphérique extérieur (21) de la marque (20) est continuellement en contact de manière annulaire avec la surface intérieure (2A) avant que la marque (20) ne soit combinée au corps de jante (10).

10. Procédé selon la revendication 7, dans lequel la marque (20) est combinée au corps de jante (10) par chauffage.
